# EUROPEAN PATENT APPLICATION

(11) **EP 3 604 931 A1**
(43) Date of publication of application: **05.02.2020**
(21) Application number: 18771911.7
(22) Date of filing: 19.03.2018
(51) Int. Cl.: F24C 7/04, F24C 7/02, F24C 15/18, G06T 1/00

(54) **HEATING COOKING DEVICE**

(30) Priority: 23.03.2017 JP 2017057064
(71) Applicant: Panasonic Intellectual Property Management Co., Ltd., Osaka-shi, Osaka 540-6207 (JP)
(72) Inventor: KONDO, Ryuta, Osaka-shi, Osaka 540-6207 (JP); SADAHIRA, Masafumi, Osaka-shi, Osaka 540-6207 (JP); NAKAMURA, Hideki, Osaka-shi, Osaka 540-6207 (JP)
(74) Representative: SSM Sandmair
(86) International application number: PCT/JP2018/010676
(87) International publication number: WO 2018/173987

(57) **Abstract**

A heating cooking device includes a heater, a heating chamber, an imaging unit, a lighting unit, an image processor, and a lighting controller. The heating chamber accommodates an object to be heated. The imaging unit take images of the inside of the heating chamber. The lighting unit illuminates the inside of the heating chamber. The image processor analyzes an image to detect the brightness of the object to be heated in the image. The lighting controller controls the lighting unit in response to the brightness of the object to be heated. This aspect allows the heating cooking device to accurately determine a cooking state of the object to be heated on the basis of the image of the inside of the heating chamber taken to control the heater in response to the cooking state.

## Description

### TECHNICAL FIELD

The present disclosure relates to a heating cooking device for cooking foodstuffs or other objects.

### BACKGROUND

In a heating cooking device with a heating chamber, there has been known a technique in which an imaging unit taking images of the inside of the heating chamber is provided in order to determine a state of foodstuffs as an object to be heated (refer to PTL 1 for example). A heating cooking device described in PTL 1 performs image processing for images taken by the imaging unit to determine a state of foodstuffs.

### Citation List

### Patent Literature

**PTL 1:** Japanese Patent Unexamined Publication No. 2001-272045

### SUMMARY

In the above-described conventional heating cooking device, too strong lighting can cause an image of foodstuffs whiter than actual or a dark shadow behind foodstuffs.

A heating cooking device with a heating chamber usually cooks foodstuffs rested on a dish or parchment paper. A heating cooking device described in PTL 1 executes edge tracing in order to separate regions of foodstuffs from those of the others (e.g., a dish) in an image taken.

The above-described phenomenon due to the influence of lighting, however, makes it difficult to accurately execute edge tracing. Foodstuffs in a color approximate to their background, particularly both in whitish, make it further difficult.

An object of the present disclosure, in order to solve the above-described conventional problem, is to provide a heating cooking device that has an imaging unit and a lighting unit and accurately detects regions of foodstuffs in order to determine a state of the foodstuffs.

A heating cooking device of one aspect of the present disclosure includes a heater, a heating chamber, an imaging unit, a lighting unit, an image processor, and a lighting controller. The heating chamber accommodates an object to be heated. The imaging unit takes images of the inside of the heating chamber. The lighting unit illuminates the inside of the heating chamber. The image processor analyzes an image to detect the brightness of an object to be heated in the image. The lighting controller controls the lighting unit in response to the brightness of an object to be heated in the image.

The heating cooking device of this aspect is capable of accurately determining a cooking state of an object to be heated on the basis of an image of the inside of the heating chamber taken to control the heater in response to the cooking state.

### BRIEF DESCRIPTION OF DRAWINGS

FIG. 1 is an outline block diagram showing the substantial part of a heating cooking device according to the first exemplary embodiment of the present disclosure.
FIG. 2 is an outline block diagram showing another lighting pattern of the heating cooking device according to the first embodiment.
FIG. 3 illustrates the relationship between distance D from the imaging unit and illuminance I inside the heating chamber of the heating cooking device according to the first embodiment.
FIG. 4 is an outline block diagram showing the substantial part of a heating cooking device according to the second exemplary embodiment of the present disclosure.

### DESCRIPTION OF EMBODIMENTS

A heating cooking device of the first aspect of the present disclosure includes a heater, a heating chamber, an imaging unit, a lighting unit, an image processor, and a lighting controller. The heating chamber accommodates an object to be heated. The imaging unit takes images of the inside of the heating chamber. The lighting unit illuminates the inside of the heating chamber. The image processor analyzes an image to detect the brightness of an object to be heated in the image. The lighting controller controls the lighting unit in response to the brightness of the object to be heated in the image.

In a heating cooking device of the second aspect of the present disclosure, besides those of the first aspect, the lighting unit has multiple lighting elements, and the lighting controller is configured to turn on and off the lighting elements individually.

In a heating cooking device of the third aspect of the present disclosure, besides those of the first aspect, the lighting controller is configured to control the lighting unit to adjust the halftone brightness.

In a heating cooking device of the fourth aspect of the present disclosure, besides those of the first aspect, the lighting controller is configured to control the lighting unit to increase the illuminance at greater distances from the imaging unit.

Hereinafter, a description is made of a heating cooking device of the present disclosure with reference to the related drawings.

### FIRST EXEMPLARY EMBODIMENT

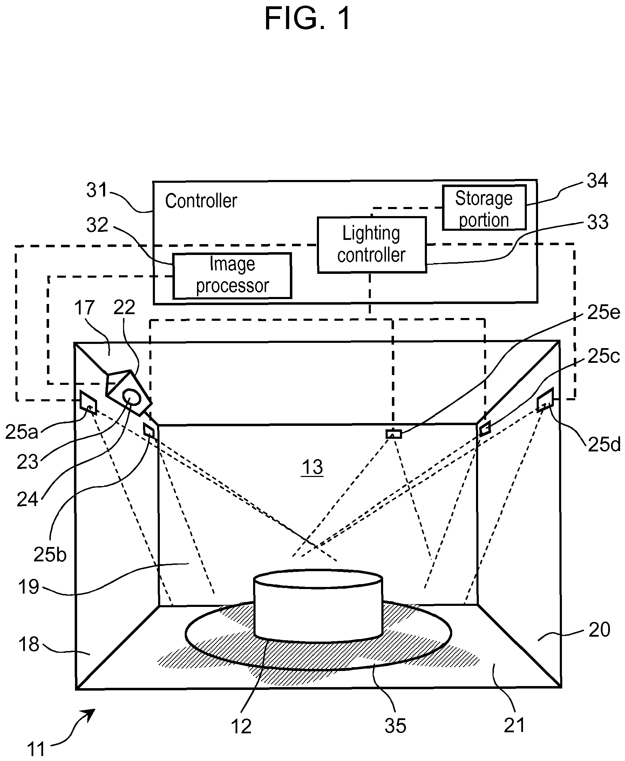

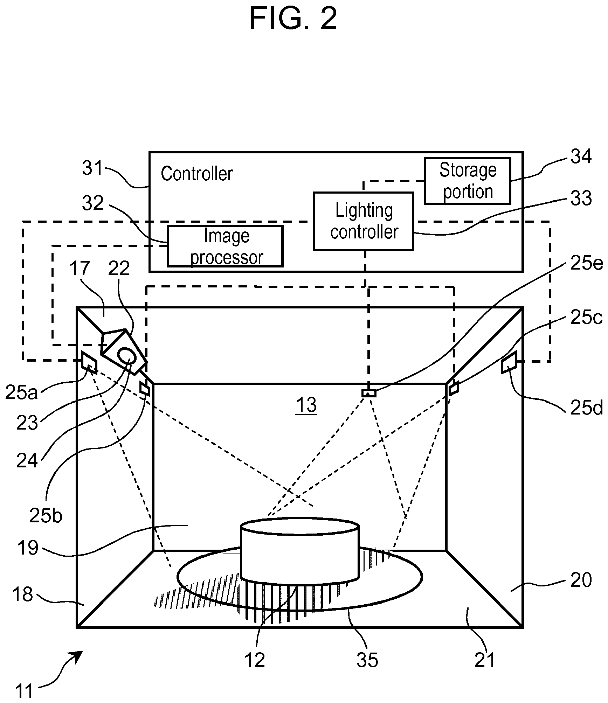

FIG. 1 is an outline block diagram showing the substantial part of heating cooking device 11 according to the first exemplary embodiment of the present disclosure. FIG. 2 is an outline block diagram showing another lighting pattern of heating cooking device 11 according to the embodiment.

As shown in FIGs. 1 and 2, heating cooking device 11 includes heating chamber 13 that accommodates foodstuff 12 as an object to be heated. Heating cooking device 11 is configured to use a heater (unillustrated) such as a radiation heater, magnetron, and vapor generator, to heat foodstuff 12 accommodated in heating chamber 13.

In this embodiment, the front side of FIGs. 1 and 2 is defined as the front of heating cooking device 11. The right side of FIGs. 1 and 2 is defined as the right of heating cooking device 11.

Heating chamber 13 has a shape of substantially rectangular parallelepiped composed of ceiling 17, left sidewall 18, back surface 19, right sidewall 20, bottom surface 21, all as wall surfaces, and a door (unillustrated). Ceiling 17, left sidewall 18, back surface 19, and right sidewall 20 are formed of a material such as an enamel steel plate, stainless steel plate, and coated steel plate. Heating chamber 13 has a width of 400 mm and a depth of 300 mm for example.

Heating chamber 13 has slope 22 formed by drawing compound that partly extends in the depth direction near the center of the uppermost part of left sidewall 18. There is imaging unit 23 disposed outside slope 22.

Imaging unit 23 takes images of the inside of heating chamber 13 through through hole 24 provided in slope 22. Imaging unit 23 is disposed with its imaging central axis 30 degrees downward relative to the horizontal direction in order to take images of foodstuff 12. It is only required that imaging unit 23 is mounted at any angle between 0 and 50 degrees in response to the view angle of imaging unit 23.

Slope 22 is vertical to the imaging central axis of imaging unit 23. Imaging unit 23 is of a fixed focus type in consideration of price. In this case, a unit with a wider view angle is more advantageous from the aspect of focus adjustment.

Lighting elements 25a through 25d are LEDs (light emitting diode) composing the lighting unit. Lighting elements 25a through 25d are respectively disposed at the front and rear parts of the uppermost part of left sidewall 18, and at the rear and front parts of the uppermost part of right sidewall 20.

In this embodiment, the centers of lighting elements 25a and 25d are disposed 250 mm ahead of back surface 19. The centers of lighting elements 25b and 25c are disposed 50 mm ahead of back surface 19.

In a planar view, there is an angle of approximately 26.5 degrees formed between the straight line connecting between the center of heating chamber 13 and imaging unit 23; and the straight line connecting between the center of heating chamber 13 and lighting element 25a. There is an angle of approximately 26.5 degrees formed between the straight line connecting between the center of heating chamber 13 and imaging unit 23; and the straight line connecting between the center of heating chamber 13 and lighting element 25b.

In the same way, there is an angle of approximately 26.5 degrees formed between the straight line connecting between the center of heating chamber 13 and imaging unit 23; and the straight line connecting between the center of heating chamber 13 and lighting element 25c. There is an angle of approximately 26.5 degrees formed between the straight line connecting between the center of heating chamber 13 and imaging unit 23; and the straight line connecting between the center of heating chamber 13 and lighting element 25d.

Furthermore, lighting element 25e (i.e., an LED) is disposed at the top of back surface 19, 100 mm away from right sidewall 20, to illuminate the inside of heating chamber 13.

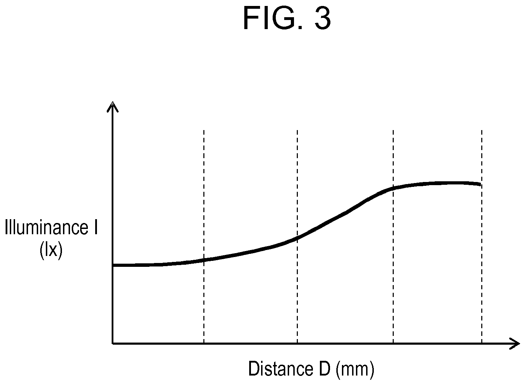

FIG. 3 illustrates the relationship between distance D (mm) from imaging unit 23 and illuminance I (lx) at a position distance D away from imaging unit 23 when lighting elements 25a through 25e are lit. Lighting element 25e is deviated to the right from the center of back surface 19, and thus the right half of heating chamber 13 is brighter than the left half.

Heating cooking device 11 has controller 31 composed of a microprocessor including devices such as a CPU, memory, and I/O interfaces. Controller 31 is electrically connected with imaging unit 23 and lighting elements 25a through 25e. Controller 31 includes image processor 32, lighting controller 33, and storage portion 34.

Image processor 32 analyzes image data inside heating chamber 13 taken by imaging unit 23. Concretely, image processor 32 separates dish 35 (i.e., a background near foodstuff 12) from the image data to specify the image of foodstuff 12.

A color (lightness) of foodstuff 12 represents a cooking state, and thus controller 31 controls the heater based on the color of foodstuff 12. Lighting controller 33 turns on or off lighting elements 25a through 25e individually in response to a lighting pattern stored in storage portion 34 to change the illuminance inside heating chamber 13.

As described above, controller 31 according to this embodiment is configured of a microprocessor (not limited). A programmable microprocessor, however, is capable of easily changing process details, increasing the design flexibility.

To increase the processing speed, controller 31 can be configured of a logical circuit. Controller 31 may be configured of physically one or more elements. If controller 31 is configured of two or more elements, image processor 32 and lighting controller 33 may be configured of separate elements. In this case, these elements are considered to correspond to one controller.

Hereinafter, a description is made of operations and actions of the above-described heating cooking device.

As shown in FIG. 1, foodstuff 12 rested on dish 35 is accommodated in heating chamber 13. All of lighting elements 25a through 25e are turned on. This lighting pattern is stored in storage portion 34 as the first pattern.

If both foodstuff 12 and dish 35 have whitish approximate colors with high lightness, light emitted from lighting elements 25a through 25e is reflected by foodstuff 12 and dish 35. This reflected light brightens the entire inside of heating chamber 13.

In this case, the brightness of part of foodstuff 12 in image data greatly increases, causing blown-out highlights.

To eliminate blown-out highlights, lighting controller 33 turns off lighting 25b on the rear left and lighting 25d on the front right as shown in FIG. 2. Storage portion 34 stores such a lighting pattern (turning on lighting element 25a on the left front, lighting element 25c on the rear right, and lighting element 25e on the rear) as the second pattern.

Consequently, the illuminance inside heating chamber 13 decreases to 3/5. The brightness of foodstuff 12 in the image data decrease to eliminate blown-out highlights. On the other hand, there are blocked-up shadows produced in the dark background (except for foodstuff 12 and dish 35).

Lighting element 25e, however, that has been turned on increases the illuminance of illuminated part of foodstuff 12 remote from imaging unit 23.

In this way, imaging unit 23, by effectively using its dynamic range, can take images of foodstuff 12 and dish 35 that have whitish approximate colors. Image processor 32 can appropriately detects the outline of foodstuff 12.

On the contrary, if both foodstuff 12 and dish 35 have blackish approximate colors with low lightness, the above-described second-pattern lighting leads to less reflection by foodstuff 12 and dish 35, darkening the entire inside of heating chamber 13.

Lighting controller 33 turns on all of lighting elements 25a through 25e as the above-described first-pattern lighting. The illuminance inside heating chamber 13 increases to eliminate blocked-up shadows. There are blown-out highlights produced in the bright background (other than foodstuff 12 and dish 35).

In this way, imaging unit 23, by effectively using its dynamic range, can take images of foodstuff 12 and dish 35 that have blackish approximate colors. Image processor 32 can appropriately detects the outline of foodstuff 12.

Lighting controller 33 thus controls lighting elements 25a through 25e as a lighting unit and changes a combination of lighting elements to be turned on, which allows imaging unit 23 to take multiple images with different brightness. Image processor 32 compares multiple images taken, which allows the outline of foodstuff 12 to be detected even if foodstuff 12 and its background have approximate colors.

As described above, controller 31 controls the heater based on a color of foodstuff 12. Hereinafter, a description is made of these circumstances taking cookie baking as an example.

First, whitish cookie dough as foodstuff 12 is placed on a white cooking sheet spread on the iron tray, and then accommodated in heating chamber 13. Image processor 32 needs to detect the outline of the cookies distinctively from the cooking sheet as the background.

When the heater heats the inside of heating chamber 13, cookie baking starts. The whitish cookie dough is browned in approximately 10 minutes, changes its lightness, and becomes brown in color; however, the cooking sheet remains white.

Image processor 32 recognizes the outline of the cookie dough as foodstuff 12, and thus does not mistake the region of the cooking sheet as the background for the region of foodstuff 12 that is not yet brown.

As described above, the temperature inside heating chamber 13 increases during heat-cooking to 170°C, which is a temperature largely exceeding the heat-resistance temperature (70°C) of typical imaging unit 23. In this embodiment, however, imaging unit 23, placed outside slope 22 inside heating chamber 13, takes images of the inside of heating chamber 13 through through hole 24. This configuration protects imaging unit 23 from high temperature inside heating chamber 13.

In this embodiment, imaging unit 23 is disposed outside slope 22. Imaging unit 23, however, may be disposed outside through hole 24 provided in the upper part of left sidewall 18, without slope 22 provided.

Slope 22 having through hole 24 may be formed at the uppermost part of right sidewall 20 or at the uppermost part of back surface 19 to allow imaging unit 23 to be disposed outside slope 22.

Imaging unit 23 disposed above ceiling 17 may take images of the inside of heating chamber 13 through a through hole provided in ceiling 17.

Where and how many lighting elements are disposed are not limited to this embodiment. For example, more lighting elements may be disposed on ceiling 17.

### SECOND EXEMPLARY EMBODIMENT

Hereinafter, a description is made of a heating cooking device according to the second exemplary embodiment of the present disclosure. In the following description, a component identical or equivalent to that of the first embodiment is given the same reference mark, and a duplicate description is omitted.

In this embodiment, lighting controller 41 controls lighting in a manner different from that of lighting controller 33 in the first embodiment.

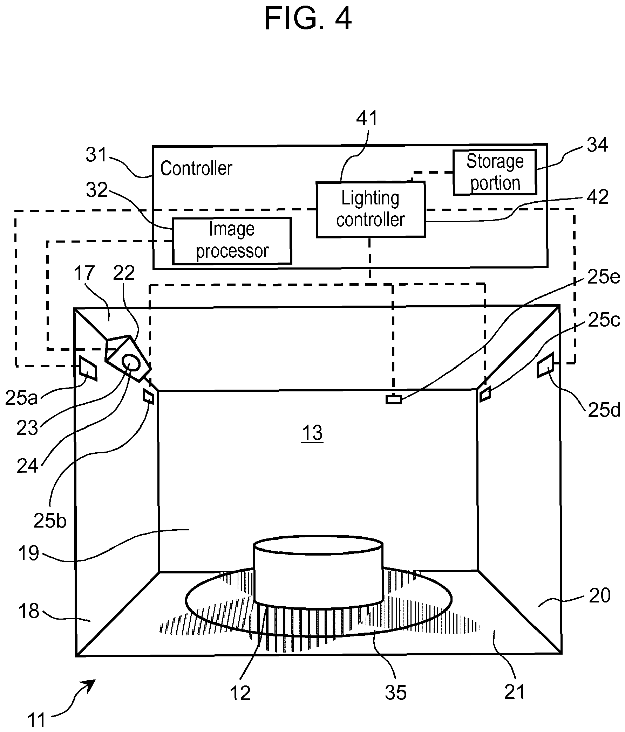

FIG. 4 is an outline block diagram showing the substantial part of a heating cooking device according to the second embodiment of the present disclosure.

As shown in FIG. 4 in the embodiment, lighting controller 41, unlike lighting controller 33, transmits PWM signals with a pulse width changed in response to desired brightness to lighting elements 25a through 25e, and adjusts the brightness of them to multiple set values.

According to the embodiment, by adjusting each brightness of lighting elements 25a through 25e to multiple set values, the illuminance inside heating chamber 13 changes. This allows taking multiple images with different illuminance. As a result, even if foodstuff 12 and its near background have approximate colors, the difference in the colors can be taken by setting the lighting level to what can be discriminated in multi-level gray scale. This allows outline detecting unit 32 to accurately detect foodstuff 12 by separating dish 35 as the background.

As described above in this embodiment, lighting controller 41 transmits PWM signals with a pulse width changed so as to change each brightness of lighting elements 25a through 25e to a desired set value. Here, lighting controller 41 may change each amount of current supplied to lighting elements 25a through 25e, instead of changing a pulse width.

### INDUSTRIAL APPLICABILITY

The present disclosure is applicable to a heating cooking device for cooking foodstuffs.

### REFERENCE MARKS IN THE DRAWINGS

- 11: heating cooking device
- 12: foodstuff
- 13: heating chamber
- 17: ceiling
- 18: left sidewall
- 19: back surface
- 20: right sidewall
- 23: imaging unit
- 24: through hole
- 25a, 25b, 25c, 25d, 25e: lighting element
- 32: image processor
- 33, 41: lighting controller

## Claims

1. A heating cooking device comprising:
a heater;
a heating chamber configured to accommodate an object to be heated;
an imaging unit configured to take an image of an inside of the heating chamber;
a lighting unit configured to illuminate the inside of the heating chamber;
an image processor configured to analyze the image and to detect brightness of the object to be heated in the image; and
a lighting controller configured to control the lighting unit in response to the brightness of the object to be heated in the image.

2. The heating cooking device of claim 1,
wherein the lighting unit has a plurality of lighting elements, and
wherein the lighting controller is configured to turn on and off each of the plurality of lighting elements.

3. The heating cooking device of claim 1, wherein the lighting controller is configured to control the lighting unit to adjust halftone brightness.

4. The heating cooking device of claim 1, wherein the lighting controller is configured to control the lighting unit to increase illuminance at greater distances from the imaging unit.
